Europäisches Patentamt

European Patent Office

Office européen des brevets

(11) Numéro de publication : **0 163 346 B1**

# (12) FASCICULE DE BREVET EUROPÉEN

(45) Date de publication du fascicule du brevet :
**09.08.89**

(21) Numéro de dépôt : **85200787.1**

(22) Date de dépôt : **15.05.85**

(51) Int. Cl.⁴ : **G 01 S 13/87**, G 01 C 21/16,
G 01 S 5/14

(54) **Système de guidage terminal ou de recalage de position pour aéronef par mesures de distance et d'angle.**

(30) Priorité : **29.05.84 FR 8408391**

(43) Date de publication de la demande :
**04.12.85 Bulletin 85/49**

(45) Mention de la délivrance du brevet :
**09.08.89 Bulletin 89/32**

(84) Etats contractants désignés :
**DE FR GB**

(56) Documents cités :
**FR-A- 2 343 258
FR-A- 2 435 866
FR-A- 2 504 683
US-A- 4 168 524**

(73) Titulaire : **TELECOMMUNICATIONS RADIOELECTRI-
QUES ET TELEPHONIQUES T.R.T.
88, rue Brillat Savarin
F-75013 Paris (FR)
FR
N.V. Philips' Gloeilampenfabrieken
Groenewoudseweg 1
NL-5621 BA Eindhoven (NL)
DE GB**

(72) Inventeur : **Tomasi, Jean-Pierre
SOCIETE CIVILE S.P.I.D. 209 rue de l'université
F-75007 Paris (FR)**

(74) Mandataire : **Pyronnet, Jacques et al
Société Civile S.P.I.D. 209 rue de l'Université
F-75007 Paris (FR)**

Jouve, 18, rue St-Denis, 75001 Paris, France

**EP 0 163 346 B1**

**Description**

L'invention concerne un système de guidage terminal ou de recalage de position pour aéronef, notamment pour missile de reconnaissance aérienne, ledit système étant muni de moyens de calcul, d'un radioaltimètre pour déterminer l'altitude H de l'aéronef, lesdits moyens et le radioaltimètre étant embarqués à bord de l'aéronef, et d'un répondeur disposé au sol à l'emplacement A souhaité pour le retour de l'aéronef ou le recalage de position, ledit répondeur coopérant avec le radioaltimètre dès que l'aéronef pénètre dans un volume prédéterminé centré au point A,

le radioaltimètre comportant un générateur d'une onde modulée en fréquence, une antenne émettrice et une antenne réceptrice dirigées vers le sol, un circulateur reliant le générateur à l'antenne émettrice, un premier mélangeur des signaux émis et reçus délivrant un signal de battement représentatif de l'altitude H dans le premier de deux modes d'opération alternés, et des moyens pour décaler le signal de battement d'une valeur de fréquence prédéterminée F1 dans le second mode d'opération, le signal de battement étant alors représentatif de la distance D de l'aéronef au point A,

le répondeur étant du type à pseudo-onde entretenue comportant des moyens d'antenne comprenant une première antenne émettrice-réceptrice, un premier commutateur à deux positions pour radio-fréquence reliant les moyens d'antenne alternativement au récepteur et à l'émetteur du répondeur dans le second mode d'opération et de moyens de décalage en fréquence du signal réémis comprenant un premier oscillateur de fréquence de décalage de valeur F1.

L'invention s'applique de préférence à un aéronef qui possède une centrale à inertie et des moyens de calcul suffisants.

Les missiles de reconnaisssance aérienne sont conçus pour, partant d'une base, parcourir un certain trajet prédéterminé, effectuer des observations au-dessus de certaines zones et revenir à une base qui peut être la base de départ ou une autre base et qui correspond à la fin du trajet. Toutes ces opérations sont effectuées automatiquement au moyen d'une part d'une centrale à inertie qui permet au missile de connaître à tout instant, pendant le vol, ses accélérations, vitesse et position horizontales, d'autre part d'un radioaltimètre qui indique la hauteur par rapport au sol. Le trajet horizontal ainsi que la hauteur sont programmés à l'avance et un ordinateur embarqué permet de comparer à tout instant la position théorique du missile à la position indiquée par la centrale à inertie et de faire au fur et à mesure les corrections de pilotage nécessaires pour maintenir le missile aussi proche que possible de la trajectoire théorique prévue.

Le trajet parcouru par le missile est de l'ordre de quelques centaines de kilomètres et bien que sa centrale à inertie soit très précise, son erreur de position, à l'arrivée, est de l'ordre de quelques centaines de mètres. Or, on souhaite récupérer le missile ou à tout le moins les informations qu'il a recueillies au cours de sa mission et cette imprécision sur la position du point d'atterrissage peut s'avérer gênante aussi bien pour la difficulté de localiser précisément ce qui doit être récupéré et qui peut être parachuté au retour de l'engin que pour l'espace à prévoir pour cet atterrissage. D'une façon générale, on s'accommode des inconvénients précités et aucun système de guidage terminal n'est prévu pour le missile qui reste autonome du début à la fin de son trajet.

L'invention a pour but d'élaborer un système de guidage terminal ou de recalage de position pour aéronef qui soit simple à réaliser et à mettre en œuvre. L'idée de départ de l'invention est de mettre à profit la présence du radioaltimètre déjà présent à bord de l'aéronef, en le faisant coopérer, à proximité du point de retour, ou de recalage de position, avec un répondeur-balise ce dernier pouvant être d'un type connu en soi et de préférence tel que décrit dans le brevet français 2 435 866, ce qui permet d'obtenir une portée de fonctionnement suffisante, sans risque d'éblouissement des récepteurs ni d'accrochage du répondeur sur un écho intempestif du signal réémis.

Du document 2 343 258 au nom de la demanderesse on connaît un système interrogateur-répondeur conçu pour déterminer la position de l'interrogateur par mesure de distances et d'angles. Ce système n'est cependant pas adapté au guidage terminal d'un missile et sa ressemblance avec le système selon l'invention se limite aux caractéristiques techniques indiquées dans le préambule de la description.

Les inconvénients de l'art antérieur sont supprimés et le but indiqué ci-dessus est atteint grâce au fait que le système de guidage terminal ou de recalage de position défini en préambule est remarquable d'une part en ce que ledit radioaltimètre est adapté pour une mesure, selon une première séquence, en alternance avec la mesure de la hauteur H, de la distance D et de l'angle $\beta$ par rapport à un axe horizontal lié au répondeur, ledit système comportant à cet effet :

Dans le radioaltimètre en premier lieu des premiers moyens pour adapter de préférence l'antenne émettrice en antenne émettrice-réceptrice reliée par l'intermédiaire d'un circulateur et du contact commun d'un commutateur à deux positions pour hyperfréquences à deux mélangeurs qui reçoivent respectivement sur une deuxième entrée le signal d'oscillation locale décalé en fréquence d'une valeur prédéterminée $F_1$, respectivement $F_2$, en second lieu une chaîne de traitement du signal supplémentaire incluant l'un desdits mélangeurs pour la détermination de l'angle $\beta$.

Dans le répondeur une base d'antennes constituée de deux antennes réceptrices-émettrices omnidirectionnelles, dirigées vers le haut à une distance prédéterminée l l'une de l'autre sur ledit axe horizontal dont l'orientation est supposée connue à bord de l'aéronef et reliées au point d'entrée-sortie

2

dudit répondeur au moyen d'un deuxième commutateur à deux positions pour hyperfréquences, commandé selon une deuxième séquence contenue dans ladite première séquence, ladite deuxième séquence provoquant aussi dans le répondeur le décalage en fréquence $F_1$, respectivement $F_2$, du signal, d'autre part en ce que la portée de fonctionnement dudit système englobe le volume défini par la précision en distance d, h propre à l'aéronef pour son retour autonome et que la position précise de l'aéronef à proximité immédiate du point A est déterminée, lors du retour de l'aéronef, par au moins deux mesures de la distance D et de l'angle β par rapport à la base d'antennes du répondeur.

En mode d'appareil de mesure de distance et d'angle par rapport au répondeur, le radioaltimètre fonctionne avec la même antenne, fixe et dirigée vers le sol et qui est soit l'antenne d'émission soit l'antenne de réception du radioaltimètre, pour l'émission et la réception, ce qui est rendu possible par le fait que le répondeur n'est jamais très proche et, de plus, que le répondeur retarde nécessairement d'un court intervalle de temps τ' le signal qu'il réémet. D'autre part les décalages de fréquence de valeur $F_1$ et $F_2$ des signaux mis en jeu dans le système permettent de sélectionner chaque écho du répondeur en éliminant l'autre écho du répondeur et celui du sol. Comme il n'est pas indispensable que le radioaltimètre fonctionne en permanence, il est ainsi possible de l'utiliser, à proximité immédiate du point d'arrivée de l'aéronef en tant qu'appareil de mesure de distance et d'angle, le but étant que l'aéronef puisse déterminer lui-même de façon précise sa position par rapport au point A en un point de repérage à un instant donné, après quoi la procédure finale d'arrivée au point A peut être effectuée automatiquement de façon connue par exemple au moyen de la centrale à inertie et des moyens de calcul embarqués, cas dans lequel l'utilisation de l'appareil de mesure de distance et d'angle embarqué et du répondeur au point A n'est plus indispensable après le passage de l'aéronef au point de repérage. L'angle α, complémentaire de l'angle β, que permet de mesurer en valeur algébrique le système est l'angle que fait la droite reliant l'aéronef au point A avec le plan médiateur des antennes du répondeur, la valeur absolue mesurable de α étant comprise entre 0° et 90°. Il s'ensuit que la valeur de α, lors de chaque mesure d'angle ne peut être déterminée que sur une plage comprise entre — 90° et + 90°, soit 180° et il se pose un problème d'indétermination consistant à savoir par quel côté l'aéronef aborderait le point A en suivant sa trajectoire autonome, c'est-à-dire si aucune correction n'était apportée à sa trajectoire lors de son arrivée. En l'absence de cette indétermination une seule mesure de distance et d'angle suffirait pour mettre en œuvre l'invention. Dans les conditions précitées, en effectuant les deux mesures de distance et d'angle, il est possible de lever l'indétermination sur la position précise de l'aéronef indiquée ci-dessus.

La description qui suit en regard des dessins annexés, le tout donné à titre d'exemple, fera bien comprendre comment l'invention peut être réalisée.

La figure 1 montre selon une vue tridimensionnelle le volume dans lequel le système selon l'invention peut fonctionner, à proximité du point d'arrivée.

La figure 2 est un schéma synoptique du radioaltimètre adapté en appareil de mesure de distance et d'angle selon l'invention.

La figure 3 est un schéma synoptique du répondeur connu pour l'essentiel, adapté pour la mise en œuvre de l'invention.

La figure 4 illustre un mode de réalisation préféré du système de guidage selon l'invention.

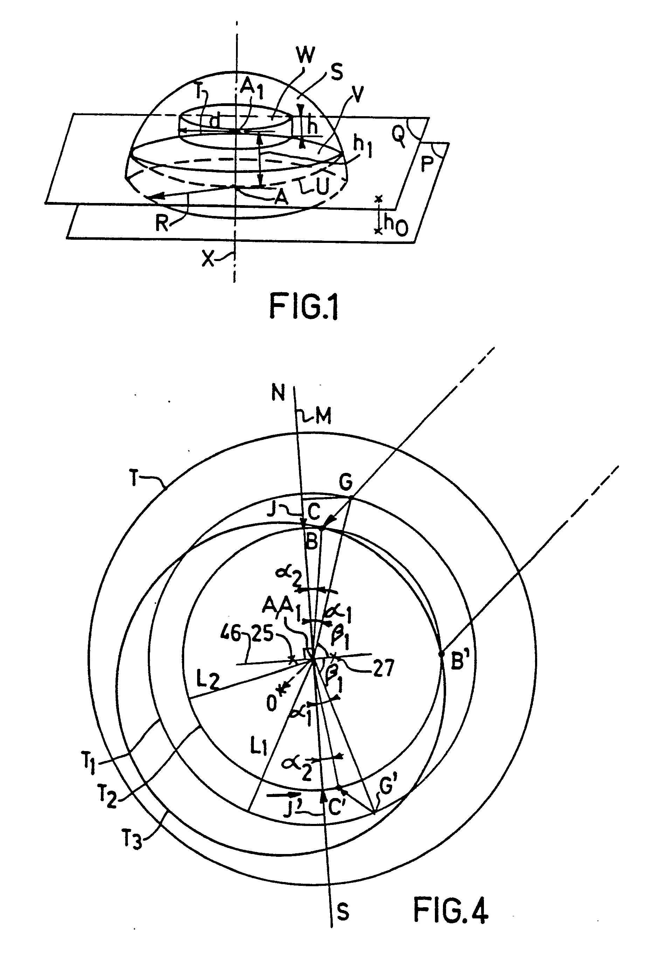

Sur la figure 1 le sol est symbolisé par un plan P auquel appartient le point A prévu pour l'arrivée de l'aéronef, et où l'on a placé un répondeur conçu pour recevoir et réémettre après amplification des ondes continues modulées en fréquence. Une demi-sphère S de centre A et de rayon R indique la portée du système de guidage, R étant la distance extrême au-delà de laquelle l'atténuation des ondes dans l'air l'emporte sur les capacités d'amplification du système, la distance D et l'angle α n'étant alors plus mesurables. Dans la pratique, lorsque l'aéronef arrive à proximité du point A, il est censé se trouver à une hauteur supérieure à une hauteur prédéterminée $h_0$ inférieure à R, c'est-à-dire au-dessus d'une surface symbolisée par un plan Q sur la figure 1 situé à la distance $h_0$ au-dessus du plan P. L'intersection de la demi-sphère S et du plan Q est le cercle T. D'autre part, le diagramme d'antenne du répondeur au point A est tel que la réception est possible au-dessus d'une surface courbe de révolution autour du point A référencée U et qui peut être assimilée en première approximation soit à une calotte sphérique soit à un cône de sommet A et passant par le cercle T. Le volume délimité par la surface courbe U et par la calotte sphérique supérieure de la demi-sphère S' limitée au cercle T est un volume de révolution V autour d'un axe vetical X passant par le point A à l'intérieur duquel le système selon l'invention peut fonctionner, ce volume V étant qualifié de deuxième volume.

Par ailleurs, l'aéronef ou, pour fixer les idées, le missile de reconnaissance est conçu pour revenir au point A à une certaine hauteur $h_1$, ce qui définit un point $A_1$ sur l'axe X. En l'absence de système de guidage terminal, la centrale à inertie et le radioaltimètre embarqués permettent d'atteindre le point $A_1$ avec la précision d dans le sens horizontal et la précision h dans le sens vertical, ce qui définit un premier volume cylindrique W. Le système de guidage terminal est conçu de façon telle que le deuxième volume V contienne entièrement le premier volume W et, de préférence, on choisit les distances $h_0$ et $h_1$ égales. Dans ces conditions, la portée R du système la plus faible possible est nécessairement supérieure à la distance d imposée par le missile ou l'aéronef.

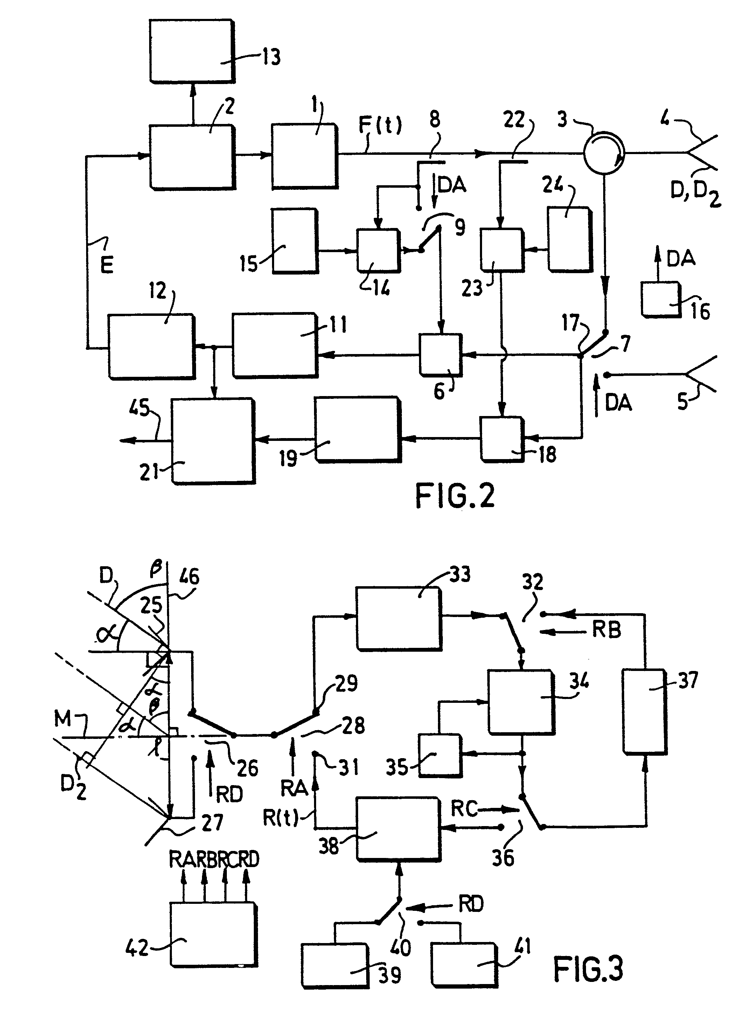

Le radioaltimètre utilisé dans l'aéronef, représenté à la figure 2 est d'un type connu et par exemple semblable à ceux qui sont décrits dans le brevet français 2 344 031. Ce radioaltimètre comporte, pour l'essentiel, un générateur de fréquence à fréquence commandée 1 qui, sous la commande d'un modulateur 2 produisant un signal de tension ou de courant en dents de scie asymétriques, par exemple à pente positive, fournit un signal modulé linéairement en fréquence de façon récurrente. Ce dernier signal à fréquence F(t) est appliqué, en général par l'intermédiaire d'un circulateur 3, à une antenne d'émission 4, à polarisation de préférence circulaire qui est montée fixe sur l'aéronef et dirigée vers le sol. L'onde émise par l'antenne 4 est réfléchie par le sol et est captée par l'antenne réceptrice 5. Pour un fonctionnemnt en radioaltimètre l'antenne 5 est reliée directement à une première entrée d'un mélangeur soustractif 6, ce qui correspond, pour un commutateur à deux positions pour hyperfréquences 7, à la position inverse de celle qui est représentée à la figure 1. La présence et la fonction du commutateur 7 sont expliquées ci-dessous. Le mélangeur 6 reçoit aussi sur une deuxième entrée une fraction du signal émis par l'intermédiaire d'un coupleur 8 et d'un commutateur à deux positions pour hyperfréquences 9 lorsque ce dernier est dans la position inverse de celle représentée sur la figure 2. Les variations de fréquence des ondes émise et reçue en fonction du temps ont la forme de signaux en dents de scie asymétriques à pente positive. Ces courbes ont la même forme que le signal de modulation fourni par le modulateur 2. La période de modulation est appelée T. Les courbes des signaux émis et reçu sont décalées entre elles du temps : $\tau = 2H/c$, qui correspond au temps de propagation de l'onde de l'antenne 4 vers l'antenne 5 via le sol, H étant la distance moyenne des antennes au sol et c étant la vitesse de propagation de l'onde.

Le mélangeur 6 forme le signal de battement à fréquence $f_b$ entre le signal prélevé sur l'oscillation locale et le signal reçu, et la fréquence de battement $f_b$ apparaît comme le décalage en fréquence entre les rampes des deux courbes en dents de scie décrites ci-dessus. Les variations de fréquence représentées par les deux courbes en question sont pratiquement linéaires et on peut écrire :

$$\frac{\Delta F}{T} = \frac{f_b}{\tau} \qquad (1)$$

$\Delta F$ étant l'écart de fréquence du signal émis ou reçu, maintenu constant.

Le signal de sortie à fréquence $f_b$ du mélangeur 6 est appliqué, par l'intermédiaire d'un amplificateur 11 à un discriminateur de fréquence 12 dont la fréquence centrale fixe est $f_0$ et qui fournit un signal E représentatif de l'écart de fréquence $f_b$-$f_0$. Ce signal est appliqué, de préférence par l'intermédiaire d'un circuit intégrateur-anamorphoseur non représenté à la borne de commande du modulateur 2 pour modifier la pente du signal de modulation en dents de scie. On a ainsi formé une boucle d'asservissement dont le signal d'erreur est constitué par le signal de sortie E du discriminateur 12 et lorsque cette boucle est stabilisée, le signal d'erreur est annulé et l'on a :

$$f_b = f_0$$

La formule (1) ci-dessus devient :

$$\frac{\Delta F}{T} = \frac{f_0}{\tau} \qquad (2)$$

On en déduit :

$$T = \frac{2\,\Delta F}{c \cdot f_0} \cdot H \qquad (3)$$

Dans la relation (3), le facteur $2\Delta F/c.f_0$ est connu (par exemple constant) et la période de modulation T est donc proportionnelle à la hauteur H de sorte que la mesure de la distance peut être fournie par un périodemètre 13 mesurant la période T du signal de modulation.

Outre le principe de base du radioaltimètre connu rappelé ci-dessus, il existe aussi divers moyens connus pour améliorer la linéarité des rampes de fréquence du signal F(t) et la stabilité des paramètres $\Delta F$ et $f_0$, le tout visant à améliorer la précision sur la hauteur H mesurée.

Un fonctionnement en radioaltimètre du circuit de la figure 2 suppose que les éléments 5 et 8 soient reliés directement chacun à une entrée du mélangeur 6, ce qui est obtenu lorsque les commutateurs 7 et 9 reçoivent un signal $\overline{DA}$ en provenance d'un séquenceur 16.

Selon l'invention, les commutateurs 7 et 9 permettent d'utiliser le circuit de la figure 2 comme distancemètre, en association avec un répondeur décrit ci-dessous en référence à la figure 3. A cet effet, lorsque l'aéronef pénètre à l'intérieur du volume V, le signal à fréquence F(t) émis par l'antenne 4 est reçu par le répondeur qui l'amplifie, le décale dans le temps d'un intervalle de temps $\tau'$ fixe, le décale en fréquence d'une valeur $F_1$ respectivement $F_2$, et le réémet en séquence au moyen d'une première antenne réceptrice-émettrice, sous la forme R(t). L'amplification du système est suffisante, à l'intérieur du volume V, pour que ce signal R(t) émis par exemple par la première antenne du répondeur soit capté par l'antenne 4 qui fait alors office d'antenne émettrice-réceptrice. Le signal R(t) affaibli est alors transmis, par l'intermédiaire du circulateur 3 et du commutateur 7 dans la position représentée sur la figure 2 sous la commande du signal DA, à la première entrée du mélangeur 6. Simultanément, le signal d'oscillation locale est transmis, par l'intermédiaire du coupleur 8, d'un mélangeur de fréquence 14 et du commutateur 9 dans la position représentée sur la figure 2 sous la commande du signal DA, à la deuxième entrée du mélangeur 6. Le mélangeur 14, par exemple du type à bande latérale unique (BLU) reçoit sur une deuxième entrée, d'un générateur de fréquence 15, un signal de fréquence $F_1$ de façon telle que son signal de sortie suive la même variation de fréquence que le signal $R(t)$ en provenance du répondeur. Les décalages de fréquence $F_1$ présents sur les deux entrées du mélangeur soustractif 6 s'annulent en sortie de ce mélangeur. Le décalage de fréquence $F_1$ opéré sur les deux voies permet ainsi de sélectionner l'écho en provenance de la première antenne réceptrice-émettrice du répondeur et d'éliminer celui du sol qui est aussi reçu par l'antenne 4 en mode distancemètre. Le discriminateur 12 traite alors un signal de battement à fréquence $f_{b1}$ qui est représentatif de la distance D entre le répondeur au point A et l'aéronef et cette distance D peut être mesurée en 13 par le circuit de la figure 2 comme décrit ci-dessus pour la hauteur H. On notera, dans ce cas, que le signal d'écho est retardé de la valeur $\tau'$ et que la formule qui permet de déterminer la distance s'écrit :

$$f_{b1} = f_0 = \left( \frac{2D}{c} + \tau' \right) \frac{\Delta F}{T} \qquad (4)$$

de laquelle on déduit :

$$T = \frac{2\,\Delta F}{c \cdot f_0} D + \frac{\tau'\,\Delta F}{f_0} \qquad (5)$$

On notera que, dans les formules (4) et (5), il n'est pas tenu compte de l'effet Doppler, non négligeable mais dont on peut s'affranchir de façon connue. On obtient donc, comme pour la mesure de la hauteur, l'expression d'une droite, pour les variables D et T, ce qui permet de déduire facilement la valeur de D par mesure de T.

Il est intéressant, selon l'invention, de ne pas modifier la base d'antennes du radioaltimètre lorsqu'on adapte ce dernier en distancemètre et cela pas uniquement pour des raisons de simplicité et donc d'économie. En effet, lorsque l'aéronef pénètre à l'intérieur du volume V il n'est généralement pas dirigé vers l'axe X pour les raisons d'imprécision de la centrale à inertie indiquées ci-dessus et qu'on cherche justement à corriger. Dans ces conditions, l'antenne émettrice-réceptrice 4 orientée vers le sol, pourvu qu'elle ait un diagramme suffisamment large, permet une communication avec le répondeur placé en A avec un gain d'antenne fixe quel que soit l'angle de rentrée horizontal de l'aéronef dans le volume V, les antennes du répondeur ayant quant à elles un diagramme de rayonnement circulaire omnidirectionnel et étant dirigées vers le haut. L'avantage ainsi obtenu d'un gain d'antennes indépendant de l'orientation dans un plan horizontal de l'aéronef est contrebalancé par le fait que ce gain d'antennes est faible. Ceci explique pourquoi il est nécessaire d'utiliser un répondeur apte à procurer un gain élevé, de préférence tel que décrit ci-dessous en référence à la figure 3.

Selon l'invention, en plus des moyens décrits ci-dessus pour adapter le radioaltimètre en appareil de mesure de distance, le radioaltimètre représenté à la figure 2 comporte une chaîne de traitement du signal supplémentaire pour la détermination de l'angle $\alpha$. A partir du point commun 17 du commutateur 7, cette chaîne comporte en cascade un deuxième mélangeur soustratif 18, un deuxième amplificateur 19 et un organe de mesure et de calcul d'angle 21. Par ailleurs, l'organe 21 reçoit sur une deuxième entrée le signal de sortie de l'amplificateur 11 et le signal d'oscillation locale est transmis, par l'intermédiaire d'un deuxième coupleur 22 et d'un mélangeur de fréquence 23 à une deuxième entrée du mélangeur 18. Le mélangeur 23, par exemple du type à bande latérale unique (BLU) reçoit sur une deuxième entrée, d'un deuxième générateur de fréquence 24, un signal de fréquence $F_2$ de façon telle que son signal de sortie suive la même variation de fréquence que le signal $R(t)$ en provenance de la deuxième antenne réceptrice-émettrice du répondeur. Les décalages de fréquence $F_2$ présents sur les deux entrées du mélangeur soustractif 18 s'annulent en sortie de ce mélangeur. Le décalage de fréquence $F_2$ opéré sur les deux voies permet ainsi de sélectionner l'écho en provenance de la deuxième antenne réceptrice-émettrice du répondeur et d'éliminer celui du sol qui est ausi reçu par l'antenne 4 en mode appareil de mesure d'angle. Pour une meilleure compréhension de la séquence de fonctionnement de l'appareil de la figure 2 et de la façon dont est déterminé l'angle $\alpha$ il est souhaitable d'expliquer préalablement la structure et le fonctionnement du répondeur en référence à la figure 3. Ce répondeur utilisé pour la mise en œuvre de l'invention est connu, pour l'essentiel, notamment du brevet français 2 435 866, déjà mentionné ci-dessus, au nom de la demanderesse.

Le répondeur de la figure 3 permet d'améliorer le découplage entre le signal reçu et le signal réémis et d'obtenir des amplifications très élevées. Une première et une deuxième antennes réceptrices-émettrices 25, respectivement 27, sont reliées, par l'intermédiaire d'un commutateur à deux positions pour hyperfréquence 26, à la borne milieu d'un commutateur à deux positions pour hyperfréquences 28 dont les contacts 29 et 31 constituent les bornes d'entrée et de sortie du répondeur. L'entrée 29 est reliée à un contact d'un commutateur à deux positions 32 de préférence par l'intermédiaire d'un préamplificateur 33 présentant un bon rapport signal sur bruit. La présence du préamplificateur 33 n'est pas indispensable mais souhaitable dans la mesure où il permet d'améliorer le rapport signal sur bruit, étant donné que l'on cherche à obtenir un gain élevé. La borne milieu du cummutateur 32 est reliée à l'entrée d'un amplificateur 34 dont l'amplification est régulée par un circuit de commande de gain 35 connu en soi rebouclé entre la sortie de l'amplificateur et une entrée de commande. La sortie de l'amplificateur 34 est connectée à la borne milieu d'un commutateur à deux positions 36 dont les contacts sont reliés respectivement à l'entrée d'une ligne à retard 37 et à l'entrée d'un mélangeur de fréquence 38. La sortie de la ligne à retard 37 est reliée à l'autre contact du commutateur 32 et la sortie du mélangeur 38 au contact 31 du commutateur 28. Le mélangeur 38, par exemple du type à bande latérale unique (BLU) reçoit sur une deuxième entrée, d'un générateur de fréquence 39 respectivement d'un générateur de fréquence 41, par l'intermédiaire d'un commutateur à deux positions 40, un signal de fréquence $F_1$, respectivement $F_2$, de façon telle que cette fréquence soit ajoutée respectivement retranchée de celle du signal d'entrée en provenance de l'antenne 25 ou 27. Le signal de sortie R(t) du mélangeur 38 et donc du répondeur-balise situé au point A est décalé en fréquence par rapport au signal d'entrée du répondeur, de la valeur $F_1$ ou $F_2$, en séquence. Comme on l'a décrit ci-dessus, le signal d'oscillation locale, dans la radioaltimètre modifié embarqué, est décalé de la même valeur $F_1$ et $F_2$ et dans le même sens, c'est-à-dire par addition, respectivement soustraction de $F_1$ ou $F_2$, pour comparaison dans le mélangeur 6, respectivement 18, figure 2, avec le signal R(t) capté par l'antenne 4. Le fonctionnement des commutateurs 26 et 40 est synchrone, de façon telle qu'à la première antenne 25 est associé le générateur de fréquence 39 et à la deuxième antenne 27 le générateur de fréquence 41, sous la commande d'un signal RD en provenance d'un séquenceur 42. On suppose pour l'instant que les commutateurs 26 et 40 occupent la position indiquée sur la figure 3.

Le répondeur de la figure 3 est dit à pseudo-onde entretenue du fait qu'il transforme un signal à onde entretenue en provenance du radioaltimètre à son entrée en un signal de sortie haché. Le hachage du signal ne présente aucun inconvénient pour le système pourvu que la fréquence de hachage respecte le théorème d'échantillonnage par rapport aux fréquences de battement $f_{b1}$ respectivement $f_{b2}$ en sortie des mélangeurs 6 respectivement 18, figure 2, qui sont très voisines de la fréquence de consigne $f_0$ dans le radioaltimètre transformé. La fréquence du signal RA est double de celle du signal RD. Il faut donc que la fréquence du signal RD soit au moins double de la fréquence $f_0$. Pour le radioaltimètre de la figure 2, la fréquence $f_0$ est généralement choisie inférieure à 100 kHz et typiquement égale à 25 kHz ou 50 kHz. En conséquence on choisit pour le signal RD une fréquence au moins égale à 200 kHz, ce qui entraîne, pour le signal RA, une fréquence supérieure ou égale à 400 kHz.

Les commutateurs 26 et 40 étant supposés occuper la position indiquée sur la figure 3, on décrit ci-dessous le fonctionnement du répondeur. On peut distinguer trois phases de fonctionnement, à savoir une phase de réception, une phase de bouclage interne dite de recirculation et une phase d'émission. La phase de réception est celle qui est représentée sur la figure 3. La ligne à retard 37 accumule, pendant un temps $\tau_1$, le signal reçu par l'antenne 25 et amplifié à travers les amplificateurs 33 et 34, puis le commutateur 32 change de position sous l'influence du signal $\overline{RB}$, ce qui marque le début de la phase de recirculation pendant un temps encore égal à $\tau_1$. Pendant la phase de recirculation, le signal circule en boucle à travers les éléments 34 et 37, l'amplification apportée par l'amplificateur 34 étant supérieure à l'atténuation due à la ligne à retard 37. Pendant la phase de recirculation, le commutateur 28 peut occuper une position quelconque sous la commande du signal RA ou $\overline{RA}$. A la fin du deuxième intervalle de temps consécutif de durée $\tau_1$, le commutateur 36 change à son tour de position sous l'influence du signal $\overline{RC}$, ainsi que le commutateur 28 si ce n'était déjà fait à la phase précédente, ce qui marque le début de la phase d'émission de durée $\tau_1$ pendant laquelle la position des contacts des commutateurs 28, 32 et 36 est inverse de celle représentée sur la figure. Le signal est ainsi émis pendant un temps $\tau_1$ après avoir été retardé d'un temps $\tau' = 2\tau_1$, et après avoir été amplifié une fois par le préamplificateur 33 et trois fois par l'amplificateur 34. En pratique, il faut s'assurer que le signal émis par le répondeur et revenant après réflexion sur un obstacle soit suffisamment atténué pour qu'il n'existe aucun risque d'accrochage. Etant donné le gain du répondeur qui peut être supérieur à 100 dB, il faut s'assurer que la durée qui s'écoule entre le début d'une émission et le début de la réception suivante soit assez élevée pour que le risque d'accrochage indiqué ci-dessus soit physiquement impossible parce que l'obstacle provoquant l'écho devrait être trop proche et trog grand. En respectant un temps de latence de l'ordre de 1 μs entre la fin d'une émission et le début d'une réception suivante on peut montrer que l'on supprime tout risque d'accrochage pour un signal dont la porteuse a une longueur d'onde de l'ordre de 10 cm, ce qui correspond aux hyperfréquences utilisées couramment pour le système décrit. Ce temps de latence se traduit, à la figure 3, par le maintien en position d'émission des trois commutateurs 28, 32 et 36 avant leur retour simultané à la position de réception. A la fin du temps de latence, les trois commutateurs 28, 32 et 36 reviennent dans la position indiquée sur la figure, sous la commande des signaux RA, RB et RC issus du séquenceur 42, respectivement et, simultanément, les commutateurs 26 et 40 changent de position sous la commande du signal RD. La phase de fonctionnement réception-recirculation-émission du répondeur décrite ci-dessus recommence pour la réception et l'émission par l'antenne 27. A la fin de cette phase, qui s'identifie à la fin d'un cycle de fonctionnement du répondeur, les commutateurs 26, 28, 32, 36 et 40 changent tous simultanément de position de façon à occuper la position indiquée sur la figure 3 et le cycle recommence.

Par exemple, la durée $\tau_1$ est égale à 0,5 μs, ce qui donne un temps de cycle de 5 μs pour le répondeur

en tenant compte des deux temps de latence de 1 μs chacun. Pendant ce cycle, chaque antenne reçoit pendant 0,5 μs, émet 1 μs plus tard pendant 0,5 μs et le temps entre deux réceptions ou deux émissions sur l'une puis l'autre antenne est égal à 2,5 μs. Pour chaque antenne, le rapport cyclique est égal à 0,1. Ce rapport cyclique de l'ordre de 0,1 se traduit par une atténuation équivalente de quelques décibels seulement sur le signal réémis par le répondeur.

On notera qu'un autre fonctionnement est possible, pour le répondeur de la figure 3, selon lequel la phase de recirculation est supprimée. Dans ce dernier cas, le signal ne traverse qu'une fois la ligne à retard 37, deux fois l'amplificateur 34 et le rapport cyclique devient égal à 0,125. Pour ce fonctionnement simplifié les commutateurs 28, 32 et 36 fonctionnent en synchronisme, sous la commande du signal RA qui s'identifie alors aux signaux RB et RC.

Pendant le vol de l'aéronef, respectivement la mission de reconnaissance du missile, le circuit de la figure 2 est utilisé exclusivement comme radioaltimètre sous la commande du signal $\overline{DA}$. Lorsque l'aéronef ou le missile arrive à proximité du point A où se trouve la balise de la figure 3, plus précisément à partir d'une distance au moins égale à : R + 2d, indiquée par la centrale à inertie, le circuit de la figure 2 est commandé, par le séquenceur 16, pour effectuer en alternance des mesures de distance D et des mesures de hauteur H. Les moyens de calcul embarqués permettent de déduire la distance L de l'aéronef à l'axe X conformément à la formule :

$$L = \sqrt{D^2 - H^2} \tag{6}$$

En ce qui concerne l'appareil représenté à la figure 2, on peut distinguer trois phases de fonctionnement. La première phase, décrite ci-dessus est celle pendant laquelle l'appareil fonctionne en radioaltimètre, les commutateurs 7 et 9 étant dans la position inverse de celle représentée sur la figure, indépendamment du fait que le répondeur fonctionne ou non selon l'éloignement mutuel des circuits des figures 2 et 3. Les deuxième et troisième phases sont obtenues lorsque l'aéronef est à l'intérieur du volume V, les commutateurs 7 et 9 étant dans la position représentée sur la figure 2, état pour lequel les mesures de D et α sont effectuées simultanément. La deuxième phase déjà partiellement décrite ci-dessus, est celle pendant laquelle la première antenne 25 du répondeur est active, les commutateurs 26 et 40 étant dans la position indiquée sur la figure 3. La troisième phase est celle pendant laquelle la deuxième antenne 27 du répondeur est active, les commutateurs 26 et 40 étant dans la position inverse de celle indiquée sur la figure 3. On notera que les séquenceurs 16 et 42 ne sont pas synchronisés. Pendant chaque troisième phase, l'organe 21 reçoit le signal filtré (c'est-à-dire débarrassé de l'échantillonnage dû aux commutations du répondeur) à fréquence $f_{b2}$ tel que :

$$f_{b2} = \left( \frac{2 D_2}{C} + \tau' \right) \frac{\Delta F}{T} \tag{7}$$

$D_2$ étant la distance qui sépare les antennes 4 et 27. De façon symétrique, le signal à fréquence $f_b$ (soit $f_0$) en provenance de l'amplificateur 11 est transmis à l'organe 21 après filtrage, c'est-à-dire après avoir été débarrassé de l'échantillonnage dû aux commutations du répondeur. La formule (7) est à comparer à la formule (4) ci-dessus dans laquelle D représente précisément la distance entre les antennes 4 et 25. Les segments de longueur D et $D_2$ peuvent être considérés comme parallèles à leur extrémité liée au répondeur et comme confondus à leur extrémité liée à l'appareil de la figure 2, avec une très bonne approximation, étant donné que les distances D et $D_2$ sont de l'ordre de plusieurs centaines de mètres alors que la distance l qui sépare les antennes 25 et 27 est de l'ordre du mètre. Il en résulte que l'angle α à déterminer, qui est l'angle que fait la direction aéronef-répondeur avec le plan médiateur M des deux antennes 25 et 27 satisfait à la formule :

$$\sin \alpha = \frac{D_2 - D}{l} \tag{8}$$

D'autre part, en combinant les équations (4) et (7) il vient :

$$f_{b2} - f_0 = \frac{2 \Delta F}{cT} (D_2 - D) \tag{9}$$

La différence $f_{b2} - f_0$, valeur algébrique, peut s'exprimer sous la forme d'un nombre de périodes fonction linéaire croissante du temps ou encore d'un « déphasage global » φ, supérieur à 2Π en valeur absolue, sous la forme :

$$\varphi = 2 \Pi (f_0 - f_{b2}) t \tag{10}$$

en prenant une origine adéquate pour t, c'est-à-dire, pour chaque dent de scie, le point supposé commun où les trois droites d'équation F(t), R(t) (fréquences en fonction du temps) pour le signal émis par l'une ou l'autre antenne 25 ou 27, coupent l'axe des abscisses, c'est-à-dire l'axe du temps. En raisonnant ainsi, on fait une approximation qui est de même nature que celle faite ci-dessus pour les segments de longueurs D et $D_2$, mais inversée en ce sens qu'ici on suppose non parallèles des droites qui en réalité le sont. Cette approximation est cependant très bonne étant données les fréquences mises en jeu, à savoir de l'ordre de plusieurs GHz pour les signaux à fréquences F(t) et R(t), alors que la valeur de $\varphi$ est de l'ordre de quelques cycles à quelques dizaines de cycles. Par ailleurs, la fréquence F en fonction du temps du signal à fréquence F(t) pour chaque dent de scie avec l'origine indiquée ci-dessus s'écrit :

$$F = \frac{\Delta F}{T} t \tag{11}$$

En combinant les formules (8) à (11) ci-dessus, il vient :

$$\varphi = \frac{4 \Pi F l}{c} \sin \alpha \tag{12}$$

soit encore :

$$\sin \alpha = \frac{\lambda}{4 \Pi l} \varphi \tag{13}$$

avec : $\lambda = \dfrac{c}{F}$

Dans l'équation (13), les valeurs de $\lambda$ (ou F) et l sont connues avec une excellente précision mais l'angle $\varphi$ n'est pas mesurable directement : il est seulement possible de mesurer avec une assez bonne précision de l'ordre de un degré, son représentant en valeur algébrique $\varphi_0$ dont le module est inférieur à $2\Pi$ et dont le signe est soit celui qui convient pour $\varphi$ (et donc pour $\alpha$), soit le signe opposé. La mesure de $\varphi_0$ qui est une mesure de phase proprement dite donne donc lieu à une indétermination et ne suffit pas pour l'évaluation correcte de $\varphi$ à un degré près seulement alors que la valeur absolue de l'angle $\varphi$ est de l'ordre de quelques centaines à quelques milliers de degrés.

L'angle $\varphi$ peut donc s'exprimer en fonction de $\varphi_0$ sous l'une des deux formules suivantes :

$$\begin{array}{ll} \varphi = \varphi_0 + 2\,k\Pi & \text{si } \varphi \text{ est positif} \\ \varphi = \varphi_0 - 2\,k\Pi & \text{si } \varphi \text{ est négatif} \end{array} \tag{14}$$

avec k entier positif.

Pour lever l'ambiguïté attachée à la mesure de $\varphi_0$, on remarque que puisque F varie pendant la modulation en dents de scie, il en va de même pour $\varphi$, en vertu de la formule (12), de façon que par exemple entre le début ($\varphi_1$, $F_1$) et la fin ($\varphi_2$, $F_2$) de la dent de scie, il vient :

$\Delta\varphi = \varphi_2 - \varphi_1$, soit, en vertu de la formule (12):

$$\Delta\varphi = \frac{4 \Pi l \sin \alpha}{c} (F_2 - F_1) \quad \text{ou :}$$

$$\Delta\varphi = 4 \Pi l \frac{\Delta F}{c} \sin \alpha \tag{15}$$

soit :

$$\sin \alpha = \frac{c}{4 \Pi l \Delta F} \Delta\varphi \tag{16}$$

$\Delta\varphi$ est un angle électrique qui a le signe de $\alpha$ et qui, pour l'application envisagée pour l'invention, dépasse rarement $2\Pi$. Il faut noter que lorsque $\Delta\varphi$ est supérieur à $2\Pi$, sa valeur peut être mesurée puisqu'il s'agit de la variation entre les déphasages relatifs de deux signaux pendant un intervalle de temps donné qui ne comporte qu'un nombre de périodes assez réduit pour les signaux $f_{b1}$ et $f_{b2}$. Le principe de mesure de $\varphi_0$ peut être le suivant : au moment du passage par zéro de la sinusoïde du signal de battement d'une des voies on commence, avec un premier compteur, à compter les impulsions d'un générateur d'horloge à 4 MHz. Un deuxième compteur commence à compter lors du passage par zéro suivant de la sinusoïde du signal de battement de l'autre voie. A la fin de la sinusoïde de la première voie, le compteur aura compté, par exemple, 100. A cet instant, le second compteur sera, par exemple, à 20. Le déphasage est donc :

$$\varphi_0 = \frac{2\,\Pi \times 20}{100} = 0,4\,\Pi \ \text{ dans cet exemple .}$$

Pour le calcul de $\Delta\varphi$ on peut par exemple recommencer le calcul indiqué ci-dessus pour $\varphi_0$ à chaque paire de sinusoïdes et cumuler les petites différences obtenues chaque fois entre deux sinusoïdes consécutives, du début à la fin de la durée T de modulation.

Pour une précision sur la mesure de $\Delta\varphi$ comparable à la précision obtenue sur $\varphi_0$, soit un degré environ, la formule (15) donne pour sin $\alpha$ une moins bonne précision que la formule (13), comme on le verra ci-dessous, mais elle permet par contre la détermination de sin $\alpha$ sans ambiguïté.

Il est alors possible de mesurer l'angle $\Delta\varphi$ en amplitude et en signe, par exemple comme décrit ci-dessus, ce signe étant aussi celui de $\alpha$ et donc de $\varphi$ en vertu des formules (16) et (13), de calculer la valeur de sin $\alpha$ à partir de la formule (16) que l'on note sin $\alpha_{\Delta\varphi}$, de reporter cette valeur de sin $\alpha_{\Delta\varphi}$ dans la formule (12) et d'en déduire par calcul une première valeur approchée de l'angle $\varphi$, que l'on note $\varphi_{\Delta\varphi}$. D'autre part, $\varphi_0$ est aussi mesuré et s'identifie de préférence à $\varphi_1$. La comparaison des signes de $\Delta\varphi$ et de $\varphi_0$ permet de déduire laquelle parmi les formules (14) s'applique pour la détermination de K ($\varphi$ et $\Delta\varphi$ ont le même signe). Par exemple, si c'est la deuxième de ces formules qui s'applique, la valeur de k se définit comme la valeur entière la plus proche de la valeur calculée égale à :

$$\frac{\varphi_0 - \varphi_{\Delta\varphi}}{2\,\Pi}$$

On refait à l'inverse le calcul de $\varphi$ à partir de la même formule (14) qui a permis la détermination de k, avec la valeur entière trouvée pour k et on reporte enfin cette dernière valeur correcte trouvée pour $\varphi$ dans la formule (13) qui permet alors de calculer la valeur de sin $\alpha$ et par suite de $\alpha$ avec la précision souhaitée. On obtient en effet, à partir de la formule (12) en dérivant :

$$\frac{d\varphi}{d\alpha} = \frac{4\,\Pi F\,l}{c}\cos\alpha \qquad (17)$$

soit, dans l'hypothèse de : l = 1 m, F = $F_1$ = 4 GHz, par exemple :

$$\text{pour } \alpha = 0, \qquad d\alpha = 0,06 \ \ d\varphi$$
$$\text{pour } \alpha = 30^\circ, \qquad d\alpha = 0,069 \ \ d\varphi$$

c'est-à-dire qu'une erreur de $\pm 1°$ sur $\varphi$ correspond environ à 0,06° sur $\alpha$.

Par contre, si l'on voulait déterminer $\alpha$ à partir de la seule valeur de $\Delta\varphi$, on obtiendrait, par dérivation de la formule (15) :

$$\frac{d(\Delta\varphi)}{d\alpha} = \frac{4\,\Pi\,\Delta F\,l}{c}\cos\alpha$$

soit dans l'hypothèse de : d = 1 m, $\Delta F$ = 100 MHz ($F_1$ = 4,2 GHz, $F_2$ = 4,3 GHz), par exemple :

$$d\alpha = \frac{0,24}{\cos\alpha}\,d(\Delta\varphi) \qquad (18)$$

soit une précision quatre fois moindre que ci-dessus en vertu de la formule (17).

Il faut noter que pour l = 1 m et $F_1$ = 4,2 GHz, l'angle $\varphi$ varie de $2\Pi$ lorsque $\alpha$ varie de 2,1° autour de 0° ou de 2,5° autour de 30°. Etant donnée l'application numérique choisie ci-dessus, la précision obtenue pour $\alpha$ déduite de la formule (18) est donc suffisante pour être assuré que la valeur correcte pour k peut être déterminée à partir de l'une des formules (14). En effet, l'expérience acquise sur le type de radioaltimètre considéré montre que l'on peut mesurer des déphasages avec une précision de l'ordre de $\pm 1°$, soit une erreur de 2° sur la variation de la phase. Au cas où cette précision ne serait plus suffisante, on peut y remédier facilement en augmentant la valeur de l et/ou celle de $\Delta F$.

Des moyens connus pour la mise en œuvre du processus de mesure et de calcul connu explicité ci-dessus sont très précisément décrits et illustrés dans la commande de brevet français 2 481 465 au nom de la demanderesse, et ne sont pas repris ici pour ne pas alourdir la description. Ces moyens sont contenus dans l'organe 21, figure 2, à la sortie 45 duquel est mis à disposition un signal électrique représentatif de l'angle $\alpha$. Dans la pratique, on détermine aussi l'angle $\beta$, complémentaire de l'angle $\alpha$, qui est l'angle que fait la direction aéronef-répondeur avec l'axe 46 passant par les antennes 25 et 27.

La précision obtenue sur l'angle $\alpha$ et donc $\beta$ dépend de cet angle lui-même. On raisonne ici sur les valeurs absolues des angles $\alpha$ et $\beta$ comprises entre 0 et 90°. L'erreur est de 0,4° environ lorsque l'angle $\alpha$

EP 0 163 346 B1

est faible (β voisin de 90° en valeur absolue) et augmente progressivement lorsqu'il devient voisin de 90° (β voisin de 0°). Pour α = 85°, l'erreur dépasse 2°. Au-dessus de cette valeur, il est simplement possible de savoir que l'aéronef se situe à ± 5° par rapport à l'axe 46 défini par le répondeur.

Lorsque la position de l'aéronef doit être déterminée dans un système d'axes liés au point d'atterrissage, le radioaltimètre passe en mode d'appareil de mesure de distance et d'angle en coopération avec le répondeur. Ceci est effectué automatiquement et de façon autonome, dans l'aéronef, par la prise en compte des paramètres R et d (voir figure 1). Le cycle de fonctionnement des commutateurs 7 et 9, figure 2, est déclenché à une distance estimée de l'aéronef par rapport au point A qui est de l'ordre de 2d + R, le but recherché étant que ce cycle de fonctionnement ait déjà commencé lorsque l'aéronef pénètre à l'intérieur du volume V. Si la portée R n'est pas connue dans l'aéronef, cette distance estimée peut être liée uniquement à d et par exemple choisie arbitrairement égale à une valeur qui est de l'ordre de 5d. La période du cycle de fonctionnement des commutateurs 7 et 9 peut être liée à la vitesse de l'aéronef de façon telle qu'une détermination d'angle α et β, de distance D et de hauteur H soit effectuée tous les 50 à 100 m environ. Ces deux informations de distance et d'angle s'ajoutant à la hauteur précédemment mesurée en mode radioaltimètre sont suffisantes, à une indétermination près pour calculer la position du missile. En effet, la distance D permet à l'aéronef de reconnaître sa position sur une sphère de centre A et de rayon D, l'angle β sur un cône de demi-angle au sommet β dont l'axe est l'axe 46 qui relie les antennes du répondeur, et la hauteur H définit un plan horizontal. L'intersection de ce plan de ce cône et de cette sphère est constituée par deux points. Le choix entre ces deux points se fait par examen du signe de l'évolution de la distance, au moyen d'une deuxième détermination d'angle et de distance, comme décrit ci-dessous en référence à la figure 4.

La figure 4 est une vue de dessus de la zone d'arrivée ou de recalage de position de l'aéronef, sur laquelle figurent le cercle T, et les points A et $A_1$ confondus sur la figure. Deux déterminations rapprochées de la distance L, soit de $L_1$ et $L_2$ par mesure de D et H et calcul selon la formule (6), sont effectuées, à bord de l'aéronef à l'intérieur du cercle T sans qu'il soit nécessaire de modifier la trajectoire autonome de l'aéronef, aux instants $t_1$ et $t_2$ respectivement. La première distance déterminée, $L_1$ à l'instant $t_1$ permet à l'aéronef de se situer sur un cercle $T_1$ de centre $A_1$ et de rayon $L_1$. De même la deuxième distance $L_2$ à l'instant $t_2$ permet à l'aéronef de se situer sur un cercle $T_2$, plus petit que $T_1$, de centre $A_1$ et de rayon $L_2$. Par ailleurs, grâce à sa centrale à inertie et à une boussole embarquée, l'aéronef connaît à tout instant son vecteur vitesse horizontal $\vec{v}$. Au temps $t_2$, l'aéronef se trouve aussi sur le cercle $T_3$ de centre 0 et de rayon $L_1$ obtenu par translation du cercle $T_1$ selon le vecteur :

$$\vec{AO} = \int_{t_1}^{t_2} \vec{v}(t)\, dt, \text{ soit pour des instants } t_1 \text{ et } t_2$$

rapprochés, en première approximation : $\vec{AO} = \vec{v}(t_2 - t_1)$. Les cercles $T_2$ et $T_3$ se coupent en deux points B et B′. A l'instant $t_2$ l'aéronef se trouve donc en l'un des deux points B ou B′. La position des points B et B′ peut être calculée avec précision et rapidité, de façon connue, par les moyens de calcul embarqués. Il reste cependant à lever l'indétermination sur la position de l'aéronef due à l'existence de deux points possibles. Or les déterminations d'angle $\alpha_1$ et $\alpha_2$ qui sont aussi disponibles juste après les instants $t_1$ et $t_2$ respectivement conduisent aussi pour leur part à la mise à disposition de deux points possibles. Ces deux points, C et C′ appartiennent nécessairement au plan $A_1$ B B′ de la figure 4 puisqu'ils appartiennent à un plan horizontal et qu'au moins l'un d'eux doit être confondu avec B ou B′. Le point où se trouve l'aéronef à l'instant $t_2$ est donc celui qui est obtenu au moyen des deux calculs indiqués ci-dessus, à savoir le calcul à partir des distances et le calcul à partir des angles dont on décrit le principe ci-dessous :

Le premier calcul d'angle ($\alpha_1$, $\beta_1$) juste après l'instant $t_1$, permet de déterminer les points G et G′ possibles sur le cercle $T_1$, l'orientation du plan M, par exemple Sud-Nord étant supposée connue à bord de l'aéronef. De façon identique, le deuxième calcul d'angle ($\alpha_2$, $\beta_2$), juste après l'instant $t_2$, permet de déterminer les points C et C′ possibles sur le cercle $T_2$. Parmi les quatre points possibles B, B′, C, C′, le point correct, c'est-à-dire celui où se trouve l'aéronef à l'instant $t_2$, est le point qui est obtenu par les deux calculs décrits ci-dessus, c'est-à-dire le point B, confondu avec le point C. Une autre façon de procéder consiste à n'effectuer que le calcul d'angles, qui permet de déterminer les points G, G′ puis C, C′, et à considérer les vecteurs $\vec{GC}$ et $\vec{G'C'}$ et leurs projections respectives $\vec{J}$ et $\vec{J'}$ sur le plan M. On remarque que le vecteur vitesse $\vec{v}$ de l'aéronef a le sens soit du vecteur $\vec{GC}$ soit le vecteur $\vec{G'C'}$. Or le vecteur vitesse v ainsi que l'orientation du plan M sont connus dans l'aéronef. Il suffit donc de déterminer l'orientation de la projection de $\vec{v}$ sur le plan M puis de comparer cette orientation à celle des vecteurs $\vec{J}$ et $\vec{J'}$ déduits du calcul d'angles. Celui des deux vecteurs $\vec{J}$ et $\vec{J'}$ pour lequel on obtient la même orientation, en l'occurrence le vecteur $\vec{J}$ permet de déduire lequel des deux vecteurs $\vec{GC}$ ou $\vec{G'C'}$ correspond à la trajectoire autonome réelle de l'aéronef, en l'occurrence le vecteur $\vec{GC}$. A partir de l'information précise, dans l'aéronef, de la position de ce dernier à un instant connu (point C au temps $t_2$), la phase finale de guidage peut être effectuée, de façon connue, pour atteindre le point A ou A′ soit au moyen de la centrale à inertie, dont l'erreur de position vient d'être corrigée, soit au moyen du système de guidage lui-même, constitué par l'appareil de mesure de hauteur de distance et d'angle et la balise-répondeur des figures 2 et 3, ce dernier cas étant d'ailleurs préféré lorsque l'aéronef est un hélicoptère.

10

Un cas particulier d'indétermination peut se produire, pour le système décrit ci-dessus, dont la fréquence d'apparition est liée à la précision obtenue sur les mesures et les calculs indiqués plus haut, lorsque le vecteur vitesse $\vec{V}$ de l'aéronef à proximité de l'arrivée est parallèle à l'axe 46 des antennes du répondeur. Lorsqu'un tel cas, d'ailleurs très rare est détecté, dans l'aéronef, le lever de doute peut être effectué très facilement par une commande automatique de changement de trajectoire permettant de modifier de façon notable l'orientation du vecteur vitesse de l'aéronef à proximité du point A puis de recommencer la série de mesures et de calculs décrite ci-dessus. Au besoin, une commande de trajectoire en boucle peut être effectuée, lors de laquelle l'aéronef peut sortir du volume V, la série de mesures et de calculs étant à nouveau effectuée, lors de la deuxième rentrée de l'aéronef dans le volume V avec un vecteur vitesse $\vec{V}$ dont l'orientation a été notablement modifiée, ou juste après la fin de cette trajectoire en boucle.

On notera que, puisque l'orientation de $\vec{V}$ et celle de l'axe 46 sont connues à tout instant dans l'aéronef, la modification de trajectoire dans un plan sensiblement horizontal qui doit rendre $\vec{V}$ non parallèle à l'axe 46 peut s'effectuer juste avant l'entrée de l'aéronef dans le volume V, par exemple au moment où la séquence cyclique des commutateurs 7 et 9 est déclenchée. Dans ce cas, il faut veiller à ce que la trajectoire ne soit modifiée que légèrement, c'est-à-dire de quelques degrés seulement afin de s'assurer que l'aéronef pénètre bien à l'intérieur du volume V. Au besoin, la portée du répondeur peut être augmentée, pour la mise en œuvre de cette dernière variante, par exemple en augmentant la longueur d'onde $\lambda$. En variante, s'il est détecté que le vecteur vitesse $\vec{V}$ est parallèle à l'axe 46, on peut faire en sorte que l'aéronef poursuive sa course selon sa trajectoire autonome ; dans ces conditions, soit l'aéronef passe par le point $A_1$, ce qui est le but recherché, soit l'angle $\alpha$ diminue au point de devenir mesurable avec la précision requise pour lever l'ambiguïté, du fait de répéter les calculs explicités ci-dessus en référence à la figure 4.

Le système décrit ci-dessus permet une portée de détection R de l'ordre du km pour une longueur d'onde $\lambda$ de l'ordre de 7 cm et pour un produit des gains d'antenne $G_e \times G_r$ de l'ordre de 1. En comparaison, les valeurs courantes de l'erreur de position d de l'aéronef sont de l'ordre de 400 m, la disposition particulière déjà décrite des antennes 4, 25 et 27, fait qu'une grande dispersion de gain total du système interrogateur-répondeur est à prévoir si aucune précaution n'est prise, ce qui pourrait causer des saturations en certains points du système lorsque les antennes sont trop rapprochées, lors de la mesure de distance. Pour éviter cet inconvénient, les antennes 25 et 27 du répondeur sont des antennes dont le diagramme de rayonnement est, de préférence, consécanté et le gain inférieur à 0 dB au-dessous de l'horizontale. La normalisation des gains d'antenne est obtenue, en première approximation en donnant aux antennes 25 et 27 un gain G tel que :

$$G = \frac{D^2}{H^2} \tag{19}$$

soit encore :

$$G = \frac{1}{1 - \cos^2 \gamma} \tag{20}$$

$\gamma$ étant l'angle dans un plan vertical, non représenté, sous lequel est vu l'aéronef depuis le répondeur au point A. Les antennes 25 et 27 du répondeur peuvent être soit à polarisation circulaire, soit chacune constituée de deux antennes élémentaires à polarisation linéaire, perpendiculaires entre elles.

On notera qu'il est aussi possible sans sortir du cadre de l'invention, pour adapter le radioaltimètre en appareil de mesure de distance, d'adapter l'antenne réceptrice 5 du radioaltimètre en antenne émettrice-réceptrice, moyennant d'inverser les emplacements respectifs du circulateur 3 et du commutateur 7 sur le schéma de la figure 2. Le diagramme de rayonnement de l'antenne 5 doit alors être suffisamment large.

## Revendications

1. Système de guidage terminal ou de recalage de position pour aéronef, notamment pour missile de reconnaissance aérienne, ledit système étant muni de moyens de calcul, d'un radioaltimètre (figure 2) pour déterminer l'altitude H de l'aéronef, lesdits moyens et le radioaltimètre étant embarqués à bord de l'aéronef, et d'un répondeur (figure 3) disposé au sol à l'emplacement A souhaité pour le retour de l'aéronef ou le recalage de position, ledit répondeur coopérant avec le radioaltimètre dès que l'aéronef pénètre dans un volume prédéterminé centré au point A,
   — le radioaltimètre comportant un générateur (1) d'une onde modulée en fréquence, une antenne émettrice (4) et une antenne réceptrice (5) dirigées vers le sol, un circulateur (3) reliant le générateur à l'antenne émettrice, un premier mélangeur (6) des signaux émis et reçus délivrant un signal de battement représentatif de l'altitude H dans le premier de deux modes d'opération alternés, et des moyens (9, 14, 15) pour décaler le signal de battement d'une valeur de fréquence prédéterminée F1 dans le second mode d'opération, le signal de battement étant alors représentatif de la distance D de l'aéronef au point A,

— le répondeur étant du type à pseudo-onde entretenue comportant des moyens d'antenne comprenant une première antenne émettrice-réceptrice (25), un premier commutateur (28) à deux positions pour radio-fréquence reliant les moyens d'antenne alternativement au récepteur (33) et à l'émetteur (38) du répondeur dans le second mode d'opération et de moyens de décalage en fréquence du signal réémis comprenant un premier oscillateur (39) de fréquence de décalage de valeur F1, le système étant caractérisé en ce que :

— le répondeur comporte en outre dans ses moyens d'antenne, une seconde antenne émettrice-réceptrice (27) définissant avec la première antenne (25) un axe horizontal, un second commutateur (26) reliant alternativement dans le second mode d'opération la première et la seconde antennes (25, 27) au point commun du premier commutateur (28), et dans ses moyens de décalage en fréquence, un second oscillateur (41) de fréquence de décalage de valeur F2 et un troisième commutateur (40), activé en synchronisme avec le second commutateur, et reliant alternativement le premier et le second oscillateurs à un modulateur (38) du signal réémis,

— le radioaltimètre comporte en outre, pour adapter l'antenne émettrice (4) en antenne émettrice-réceptrice, un quatrième commutateur (7) pour relier dans le deuxième mode d'opération, l'antenne (4), via le circulateur, au premier mélangeur (6) recevant sur une seconde entrée un signal d'oscillation locale décalé de la fréquence F1 ainsi qu'à un second mélangeur (18) recevant sur une seconde entrée un signal d'oscillation locale décalé de la fréquence F2, et pour mesurer l'angle β défini par l'axe des moyens d'antenne du répondeur et par la droite joignant l'aéronef au répondeur, un circuit (21) de calcul recevant les signaux de sortie des deux mélangeurs.

2. Procédé pour la mise en œuvre du système de guidage ou de recalage suivant la revendication 1, caractérisé en ce que la position en un point de localisation de l'aéronef à l'intérieur dudit volume prédéterminé centré au point A est déterminée, moyennant l'utilisation du vecteur vitesse $(\vec{v})$ de l'aéronef, par la succession des étapes suivantes :

— deux mesures successives de couples distance D-angle β, et d'altitude H,

— détermination d'une première paire de points distincts (B et B') sur une cercle (L2) appartenant à un cône de sommet A à partir desdites deux mesures de distance D, et d'altitude H,

— détermination d'une deuxième paire de points distincts (C et C') sur ledit cercle (L2) à partir de la deuxième mesure d'angle β,

— sélection dudit point de localisation comme étant le point commun (B, C) auxdites première et deuxième paires de points.

3. Procédé pour la mise en œuvre du système de guidage ou de recalage suivant la revendication 1 selon lequel l'orientation du plan médiateur (M) des antennes (25, 27) du répondeur est connue dans l'aéronef, caractérisé en ce que la position en un point de localisation de l'aéronef à l'intérieur dudit volume prédéterminé centré au point A est déterminée, moyennant l'utilisation du vecteur vitesse $(\vec{v})$ de l'aéronef, par la succession des étapes suivantes :

— deux mesures successives de couples distance D-angle β, et d'altitude H,

— détermination d'une première paire de points distincts (G et G') sur un premier cercle (L1) appartenant à un cône de sommet A à partir de la première mesure d'angle β, de distance D et d'altitude H,

— détermination d'une deuxième paire de points distincts (C et C') sur un deuxième cercle (L2) appartenant à un cône de sommet A à partir de la deuxième mesure d'angle β, de distance D et d'altitude H,

— détermination de deux vecteurs vitesse possibles $(\vec{GC}$ et $\vec{G'C'})$ de l'aéronef à partir desdites paires de points définies aux étapes précédentes,

— levée de l'ambiguïté sur ladite deuxième paire de points pour la sélection parmi ces deux points de celui qui constitue ledit point de localisation par comparaison des projections sur ledit plan médiateur (M) du vecteur vitesse de l'aéronef et des deux vecteurs vitesse possibles déterminés à l'étape précédente.

4. Procédé selon la revendication 2 ou 3, caractérisé en ce que lorsque la trajectoire autonome de l'aéronef, dans ledit volume prédéterminé centré au point A est détectée comme étant sensiblement perpendiculaire au plan médiateur (M) des antennes du répondeur, une commande de changement de trajectoire permettant de modifier de façon notable l'orientation du vecteur vitesse de l'aéronef à proximité du point A est commandée automatiquement à ce dernier et que deux mesures supplémentaires de la distance D et de l'angle β sont effectuées après ledit changement de trajectoire.

5. Procédé selon la revendication 2 ou 3, caractérisé en ce que lorsque la trajectoire autonome de l'aéronef dans ledit volume prédéterminé centré au point A est détectée comme étant sensiblement perpendiculaire au plan médiateur (M) des antennes du répondeur, une commande de trajectoire en boucle permettant de modifier de façon notable l'orientation du vecteur vitesse de l'aéronef à proximité immédiate du point A est commandée automatiquement à ce dernier et que deux mesures supplémentaires de la distance D et de l'angle β sont effectuées vers la fin ou juste après la fin de ladite trajectoire en boucle.

6. Procédé selon la revendication 2 ou 3, caractérisé en ce que lorsque la trajectoire autonome de l'aéronef est détectée dans l'aéronef à proximité du point A, hors de portée du répondeur, comme étant sensiblement perpendiculaire au plan médiateur (M) des antennes du répondeur, une légère modification de trajectoire de l'aéronef est effectuée automatiquement dans l'aéronef juste avant que ce dernier soit à portée dudit répondeur.

## Claims

1. A terminal guidance or position-adjustment system for aircraft, particularly for aerial reconnaissance missiles, the system comprising computing facilities, a radio altimeter (Figure 2) for measurement of the altitude H of the aircraft, the said facilities and the radio altimeter being installed aboard the aircraft, and a transponder (Figure 3) installed on the ground at a site A intended for the return of the aircraft or the adjustment of its position, the transponder cooperating with the radio altimeter once the aircraft penetrates into a predetermined space centred at point A,

the radio altimeter comprising a frequency-modulated wave generator (1), a transmitting aerial (4) and a receiving aerial (5) directed towards the ground, a circulator (3) connecting the generator to the transmitting aerial, a first mixer (6) of the transmitted and received signals which furnishes a beat signal representative of altitude H in the first of two alternate modes of operation, and means (9, 14, 15) for shifting the beat signal-frequency by a predetermined frequency value of F1 in the second mole of operation, the beat signal thus being representative of the distance D from the aircraft to the point A,

the transponder being of the pseudo-continuous wave type comprising aerial means including a first transmitting/receiving aerial (25), a first two-position UHF switch (28) connecting the aerial means alternately to the receiver (33) and the transmitter (38) of the transponder in the second mode of operation and means for shifting the frequency of the transmitted signal which means include a first frequency oscillator (39) having a frequency shifted by a value of F1, the system being characterized in that :

the transponder further includes in its aerial means, a second transmitting/receiving aerial (27) defining a horizontal axis with the first aerial (25), a second switch (26) connecting alternately in the second mode of operation the first and the second aerials (25, 27) to the common point of the first switch (28), and in its frequency shifting means, a second frequency oscillator (41) having a frequency shifted by a value of F2 and a third switch (40), triggered synchronously with the second switch, and alternately connecting the first and second oscillators to a modulator (38) of the retransmitted signal,

the radio altimeter further includes, for adapting the transmitter aerial (4) to the transmitting/receiving aerial, a fourth switch (7) for connecting in the second mode of operation the aerial (4), via the circulator, to the first mixer (6) receiving on a second input a local oscillation signal shifted in frequency by F1 and also to a second mixer (18) receiving on a second input a local oscillation signal shifted in frequency by F2, and for measuring the angle β defined by the axis of the aerial facilities of the transponder and by the straight line extending from the aircraft to the transponder, a computing circuit (21) receiving the output signals of the two mixers.

2. A method of implementing the guidance or adjustment system according to Claim 1, characterized in that the position at a locating point of the aircraft inside the said preset space centred at point A is determined, by using the speed vector ($\vec{V}$) of the aircraft, by carrying out the following successive steps :

two successive measurements of the distance D — angle β couples, and altitude H,

determining a first pair of separate points (B and B') on a circle (L2) belonging to a cone that has peak A on the basis of the two distance measurements of distance D and altitude H,

determining a second pair of separate points (C and C') on the circle (L2) on the basis of the second measurement of angle β,

selecting the said locating point being the point (B, C) common to the first and second pairs of points.

3. A method of implementing the guidance or adjustment system as claimed in Claim 1 according to which the orientation of the median plane (M) of the aerials (25, 27) of the transponder is known in the aircraft, characterized in that the position at a locating point of the aircraft inside the said preset space centred at point A is determined, by using the speed vector ($\vec{V}$) of the aircraft, by carrying out the following successive steps :

two successive measurements of the couples of distance D — angle β, and altitude H,

determining a first pair of separate points (G and G') on a first circle (L1) belonging to a cone that has a peak A on the basis of the first measurement of angle β, distance D and altitude H,

determining a second pair of separate points (C and C') on a second circle (L2) belonging to a cone that has a peak A on the basis of the second measurement of angle β, distance D and altitude H,

determining two possible speed vectors ($\overline{GC}$ and $\overline{G'C'}$) of the aircraft on the basis of the said pairs of points defined for the previous steps,

removing the ambiguity concerning the second pair of points for selecting out of these two points the one that constitutes the said locating point, by comparing projections on the said median plane (M) of the aircraft's speed vector with the two possible speed vectors determined for the previous step.

4. A method as claimed in Claim 2 or 3, characterized in that an order to make a change of path is given automatically, enabling to modify considerably the orientation of the speed vector of the aircraft in the vicinity of point A, when the independently controlled path of the aircraft in the said preset space centred at point A is detected as being virtually perpendicular to the median plane (M) of the transponder aerials, and in that two additional measurements of the distance D and angle β are carried out after the said change of path.

5. A method as claimed in Claim 2 or 3, characterized in that an order to make a loop path enabling to modify in a known fashion the orientation of the speed vector of the aircraft in the vicinity of point A is automatically given to the aircraft when the independently controlled path of the aircraft in the said preset space centred at point A is detected as being virtually perpendicular to the median plane (M) of the transponder aerials, and in that the two additional measurements of the distance D and angle β are carried out towards the end or just after the end of the loop path.

6. A method as claimed in Claim 2 or 3, characterized in that a slight change of path of the aircraft is carried out automatically inside the aircraft just before it comes within range of the transponder, when the independently controlled path of the aircraft is detected inside the aircraft in the vicinity of point A, outside the range of the transponder, as being virtually perpendicular to the median plane (M) of the transponder aerials.

**Patentansprüche**

1. Zielanflugleit- und Positionsnachstell-System für Luftfahrzeugen, insbesondere für einen Aufklärungsflugkörper, mit Berechnungsmitteln, mit einem Funkhöhenmesser (Fig. 2) zur Höhenbestimmung H des Luftfahrzeugs, wobei diese Mittel und der Funkhöhenmesser sich an Bord des Luftfahrzeugs befinden, und mit einem Antwortsender (Fig. 3) am Boden im Gebiet A, der für die Rückkehr des Luftfahrzeugs oder für die Positionsnachstellung erforderlich ist und mit dem Flughöhenmesser zusammenarbeitet, bis das Luftfahrzeug in einen um den Punkt A zentrierten vorgegebenen Raum durchdringt, wobei

der Flughöhenmesser einen FM-Impulsgeber (1), eine auf die Erde gerichtete Sendeantenne (4) und eine auf die Erde gerichtete Empfangsantenne (5), einen den Geber mit der Sendeantenne verbindenden Zirkulator (3), einen ersten Mischer (6) der ausgestrahlten und empfangenen Signale zur Lieferung eines Schwebungssignals für die Höhe H in der ersten von zwei abwechselnden Betriebsarten, und Mittel (9, 14, 15) zum Verschieben des Schwebungssignals um einen vorgegebenen Frequenzwert F1 in der zweiten Betriebsart enthält, wobei das Schwebungssignal also die Entfernung D des Luftfahrzeugs vom Punkt A darstellt,

der Antwortsender vom Typ der kontinuierlichen Pseudowelle mit Antennenmitteln ist, die eine erste Sende/Empfangsantenne (25), einen ersten Hf-Zweistellungenschalter (28), der in der zweiten Betriebsart die Antennenmittel abwechselnd mit dem Empfänger (33) und mit dem Sender (38) des Antwortsenders verbindet, und Frequenzschiebemittel für das wiederausgestrahlte Signal enthält, die einen ersten F1-Schiebefrequenzoszillator enthalten,
dadurch gekennzeichnet, daß

der Antwortsender außerdem in seinen Antennenmitteln eine zweite Sende/Empfangsantenne (27), die zusammen mit der ersten Antenne (25) eine horizontale Achse definiert, einen zweiten Schalter (26), der im zweiten Betriebsart die ersten und zweiten Antennen (25, 27) abwechselnd mit dem gemeinsamen Punkt des ersten Schalters (28) verbindet, und in seinen Frequenzschiebemitteln einen zweiten F2-Schiebefrequenz-oszillator (41) und einen dritten, synchron mit dem zweiten Schalter betriebenen Schalter enthält, der abwechselnd die ersten und zweiten Oszillatoren mit einen Signalmodulator (38) für das wiederausge-strahlte Signal verbindet,

der Funkhöhenmesser zum Anpassen der Sendeantenne (4) für Sende/Empfangsantennenbetrieb außerdem einen vierten Schalter (7), um in der zweiten Betriebsart die Antenne (4) über einen Zirkulator sowohl mit einer ersten Mischstufe, die an einem zweiten Eingang ein örtliches, verschobenes Oszillatorsignal mit der Frequenz F1 empfängt als auch mit einer zweiten Mischstufe (18) zu verbinden, die an einem zweiten Eingang ein örtliches, verschobenes Oszillatorsignal mit der Frequenz F2 empfängt, und zum Messen des von der Achse der Antennenmittel des Antwortsenders und von der das Luftfahrzeug mit dem Antwortsender verbindenden Geraden definierten β-Winkels eine Rechenschaltung (21) enthält, die die Ausgangssignale der beiden Mischstufen empfängt.

2. Verfahren zum Durchführen des Zielanflugleit- und Positionsnachstell-Systems nach Anspruch 1, dadurch gekennzeichnet, daß die Position des Luftfahrzeugs an einem Ortungspunkt im Inneren des vorgegebenen, um den Punkt A zentrierten Raums mittels Ausnutzung des Geschwindigkeitsvektors (v) des Luftfahrzeugs durch die Aufeinanderfolge folgender Schritte bestimmt wird :

zwei aufeinanderfolgende Messungen der zusammengehörigen Größen Abstand D, Winkel β und Höhe H,

Bestimmung eines ersten Paares unterschiedener Punkte (B und B') auf einem Kreis (L2), der ausgehend von den beiden Messungen des Abstandes D und der Höhe H auf einem Scheitelkonus A erscheint,

Bestimmung eines zweiten Paares unterschiedener Punkte (C und C') auf dem Kreis (L2) ausgehend von der zweiten Messung des Winkels β,

Auswählen des Ortungspunktes als des gemeinsamen Punktes (B, C) der ersten und zweiten Punktenparre.

3. Verfahren zum Durchführen des Zielanflugleit- und Positionsnachstell-Systems nach Anspruch 1, demgemäß die Orientierung der Mittelsenkrechtenebene (M) der Antennen (25, 27) des Antwortsenders im Luftfahrzeug bekannt ist, dadurch gekennzeichnet, daß die Position des Luftfahrzeugs an einem Ortungspunkt im Inneren des vorgegebenen, um der Punkt A zentrierten Raum mittels Ausnutzung des Geschwindigkeitsvektors (v) des Luftfahrzeugs durch die Aufeinanderfolge folgender Schritte bestimmt wird :

zwei aufeinanderfolgende Messungen der zusammengehörigen Größen Abstand D, Winkel β und Höhe H,

Bestimmung eines ersten Paares unterschiedener Punkte (G und G') auf einem ersten Kreis (L1), der ausgehend von der ersten Messung des Winkels β, des Abstandes D und der Höhe H auf einem Scheitelkonus A erscheint,

Bestimmung eines zweiten Paares unterschiedener Punkte (C und C') auf einem zweiten Kreis (L2), der ausgehend von der zweiten Messung des Winkels β, des Abstands D und der Höhe H auf einem Scheitelkonus A erscheint,

Bestimmung von zwei möglichen Geschwindigkeitsvektoren (GC und G'C') des Luftfahrzeugs, ausgehend von den in den vorangehenden Schritten bestimmten Punktenpaaren,

Beseitigung der Zweideutigkeit beim zweiten Punktenpaar für die Wahl zwischen diesen zwei Punkten zum Erhalten des Punktes, der den Ortungspunkt darstellt, durch Vergleich der Projektionen auf der Mittelsenkrechtenebene (M) des Geschwindigkeitsvektors des Luftfahrzeugs und der beiden im vorangehenden Schritt bestimmten, möglichen Geschwindigkeitsvektoren.

4. Verfahren nach Anspruch 2 oder 3, dadurch gekennzeichnet, daß, wenn die autonome Bahn des Luftfahrzeugs in dem um den Punkt A zentrierten vorgegebenen Raum als im wesentlichen senkrecht auf der Mittelsenkrechtenebene (M) der Antwortsenderantennen detektiert wird, automatisch ein Bahnänderungsbefehl nach dem Luftfahrzeug ausgeht, wodurch insbesondere die Orientierung des Geschwindigkeitsvektors des Luftfahrzeugs in der Nähe des Punktes A geändert wird, und daß nach dieser Bahnänderung zwei ergänzende Messungen des Abstands D und des Winkels β ausgeführt werden.

5. Verfahren nach Anspruch 2 oder 3, dadurch gekennzeichnet, daß, wenn die autonome Bahn des Luftfahrzeugs in dem um den Punkt A zentrierten vorgegebenen Raum als im wesentlichen senkrecht auf der Mittelsenkrechtenebene (M) der Antwortsenderantennen detektiert wird, automatisch ein Bahnschleifenbefehl nach dem Luftfahrzeug ausgeht, wodurch insbesondere die Orientierung des Geschwindigkeitsvektors des Luftfahrzeugs in unmittelbarer Nähe des Punktes A geändert wird, und daß gegen Ende oder gerade nach dem Ende der Schleifenbahn zwei ergänzende Messungen des Abstands D und des Winkels β ausgeführt werden.

6. Verfahren nach Anspruch 2 oder 3, dadurch gekennzeichnet, daß, wenn die autonome Bahn des Luftfahrzeugs in dem in der Nähe des Punktes A befindlichen Luftfahrzeugs außerhalb des Bereichs des Antwortsenders als im wesentlichen senkrecht auf der Mittelsenkrechtenebene (M) der Antwortsenderantennen detektiert wird, automatisch eine leichte Bahnänderung des Luftfahrzeugs im Luftfahrzeug gerade vor dem Eintreten in den Bereich des Antwortsenders durchgeführt wird.

FIG.1

FIG.4

1

FIG.2

FIG.3